# EUROPÄISCHE PATENTSCHRIFT

(11) **EP 2 143 316 B1**
(45) Veröffentlichungstag und Bekanntmachung des Hinweises auf die Patenterteilung: **20.03.2019**
(21) Anmeldenummer: 09158200.7
(22) Anmeldetag: 20.04.2009
(51) Int. Cl.: A01D 41/127, A01D 75/18

(54) **Selbstfahrende Erntemaschine**
Self-propelled harvester
Moissonneuse automobile

(30) Priorität: 09.07.2008 DE 102008032191
(43) Veröffentlichungstag der Anmeldung: 13.01.2010
(73) Patentinhaber: CLAAS Selbstfahrende Erntemaschinen GmbH, 33428 Harsewinkel (DE)
(72) Erfinder: Behnke, Willi, 33803 Steinhagen (DE); Kettelhoit, Boris, 33335 Gütersloh (DE)
(74) Vertreter: CLAAS Gruppe

(56) Entgegenhaltungen:
- EP-A1- 0 960 558
- EP-A1- 1 238 579
- DE-A1-102006 033 100
- US-A- 4 322 937
- US-A- 6 119 442

## Beschreibung

Die Erfindung betrifft eine selbstfahrende Erntemaschine nach dem Oberbegriff des Anspruchs 1.

Aus der Praxis sind als Mähdrescher ausgebildete selbstfahrende Erntemaschinen mit auf das jeweilige Erntegut abgestimmten Erntegutbergungsvorsätzen hinlänglich bekannt. Trotz eine Mehrzahl von automatischen Einstellungen der Erntegutbergungsvorsätze wie beispielsweise Schnitthöhe, Haspelposition, Haspeldrehzahl und Messerbalkenposition muss der Fahrer des Mähdreschers dauerhaft den Erntegutfluss innerhalb des Erntegutbergungsvorsatzes visuell überwachen. Er muss beispielsweise darauf achten, dass eine gleichmäßige Erntegutgeschwindigkeit innerhalb des Erntegutbergungsvorsatzes vorhanden ist, da bei ungleichmäßigem Erntegutfluss die Erntegeschwindigkeit reduziert werden muss, um eventuelle Verstopfungen zu vermeiden. Weiterhin muss der Fahrer darauf achten, dass die Kornverluste am Erntegutbergungsvorsatz so gering wie möglich sind, da durch Spritzkörner oder Ähren, die nicht vom Erntegutbergungsvorsatz aufgenommen werden, oder durch Körner, die vor den Erntegutbergungsvorsatz fallen, überhöhte Erntegutverluste entstehen. Zusätzlich muss er den Erntegutfluss dahingehend überwachen, dass sich keine Fremdkörper in dem Erntegut befinden. Fremdkörper könnten beispielsweise aufgenommene Steine, oder auch abgebrochene Messerklingen der Erntegutschneideinrichtung, oder aber auch abgebrochene Ährenheber sein, die jeweils einen erheblichen Schaden an den Arbeitsorganen des Mähdreschers verursachen können. Als weitere Überwachungsaufgabe muss der Fahrer darauf achten, dass sich keine Ablagerungen an den Funktionselementen des Erntegutbergungsvorsatzes bilden, die die Funktionstüchtigkeit der Funktionselemente beeinträchtigen könnten. Die beschriebene dauerhafte Überwachung des Erntegutflusses innerhalb des Erntegutbergungsvorsatzes erfordert eine erhebliche Konzentration des Bedieners während des gesamten Ernteprozesses.

Aus der US 6,119,442 ist eine selbstfahrende Erntemaschine in Form eines Mähdreschers bekannt. Der Mähdrescher weist einen Erntegutbergungsvorsatz in Form eines Getreideschneidwerkes und eine Reihe von Arbeitsorganen zur Bearbeitung des Erntegutes auf. An dem Getreideschneidwerk ist oberhalb des Einzuges des Schrägförderers ein optischer Sensor angeordnet, weicher die Farbe des Erntegutes erfasst und an eine Datenverarbeitungseinheit weiterleitet, welche anhand einer Auswertung der Farbe des Erntegutes einzelne Stoffeigenschaften des Erntegutes bestimmt und entsprechend die Einstellungen der Arbeitsorgane des Mähdreschers anpasst. Nachteilig an der bekannten Erfassungseinrichtung ist es, dass lediglich die Stoffeigenschaften des Erntegutes in einem räumlich stark eingegrenzten Bereich direkt vor dem Schrägförderer erfasst werden. Etwaige Erntegutflussprobleme zwischen der Erntegutschneideinrichtung und dem Schrägförderer sind mittels der bekannten Erfassungseinrichtung ebenso wenig erfassbar, wie beispielsweise mittels des Schneidwerks aufgenommene Fremdkörper. Insbesondere bei der Aufnahme von Fremdkörpern ist es jedoch von entscheidender Bedeutung, diese frühzeitig zu erfassen, um eine Aufnahme durch die in dem Schrägförderer angeordnete Fördereinrichtung zu vermeiden, so dass weder die Fördereinrichtung noch die nachgeordneten Arbeitsorgane des Mähdreschers durch die Fremdköper beschädigt werden können.

Aus der EP 0 960 558 A1 ist eine selbstfahrende Erntemaschine mit Vorsatzgerät bekannt, an welchem mechanisch arbeitende Sensoren zur indirekten Erfassung des Massenflusses angeordnet sind.

Die DE 10 2006 033 100 A1 beschreibt den Einsatz eines Vibrationssensors, der zur Detektion von Fremdkörpern am Schneidwerk eingesetzt wird. Dabei sind mehrere, auf Erschütterungen ansprechende Vibrationssensoren über die Breite des Schneidwerks verteilt in einem so genannten Steinwall angeordnet, der sich parallel zum Messerbalken erstreckt.

Die US 4,322,937 A beschreibt einen vor der Einzugsschnecke einer Pick-up angeordneten Metalldetektor zur Detektion von metallischen Fremdkörpern, die von der Pick-up aufgenommen werden können.

Aufgabe der vorliegenden Erfindung ist es, die Nachteile des Standes der Technik zu vermeiden und insbesondere eine selbstfahrende Erntemaschine derart weiterzubilden, dass Erntegutflussprobleme und/oder Fremdkörper innerhalb des Erntegutes frühzeitig erfasst werden.

Diese Aufgabe wird erfindungsgemäß durch die kennzeichnenden Merkmale des Anspruchs 1 gelöst.

Dadurch, dass bei einer selbstfahrenden Erntemaschine mit einem Erntegutbergungsvorsatz, welcher zumindest eine Erntegutschneideinrichtung oder eine Erntegutaufnahmeeinrichtung und zumindest eine Erntegutfördereinrichtung aufweist, der selbstfahrenden Erntemaschine und/oder dem Erntebergungsvorsatz zumindest eine Sensoreinheit zugeordnet ist, die zumindest eine Kamera umfasst, welche den Erntegutfluss innerhalb des Erntegutbergungsvorsatzes überwacht, wobei die Kamera derart ausgebildet ist, dass bei erfasster Teilbreitennutzung des Erntegutbergungsvorsatzes die Überwachung des Erntegutflusses nur auf dem Teil des Erntegutbergungsvorsatzes angewandt wird, der mit Erntegut beaufschlagt wird, wird vorteilhaft erreicht, dass der Fahrer der selbstfahrenden Erntemaschine von der Aufgabe der Überwachung des Erntegutflusses weitgehend entlastet ist und er sich auf die weitere Bedienung der Erntemaschine konzentrieren kann. Weiterhin ist es vorteilhaft, dass der gesamte Erntegutfluss innerhalb des Erntegutbergungsvorsatzes mittels der Sensoreinheit selbsttätig überwacht wird, so dass eventuell auftretende Erntegutflussprobleme und/oder im Erntegut befindliche Fremdkörper frühzeitig erfasst werden. Hierdurch kann der Erntegutfluss innerhalb des Erntegutbergungsvorsatzes auf einfache und kostengünstige Weise mit unter den rauen Einsatzbedingungen in der Landtechnik erprobten Bauelementen überwacht werden.

Unter dem Erntegutfluss innerhalb des Erntegutbergungsvorsatzes ist im Sinne der Anmeldung der Weg des Erntegutes von dem ersten Kontakt des Erntegutes mit dem Erntegutbergungsvorsatzes bis zu der Übergabe des Erntegutes an eine nachgeordnete Erntegutannahmeeinrichtung der selbstfahrenden Erntemaschine zu verstehen.

Bei einer vorteilhaften Weiterbildung der Erfindung ist die Sensoreinheit mit einer Auswerte- und Steuereinheit verbunden, welche den Betrieb und/oder einzelne Funktionen des Erntegutbergungsvorsatzes steuert, so dass die Sensoreinheit im Falle von sensierten Erntegutflussproblemen und/oder Fremdkörpern innerhalb des Erntegutes unmittelbar auf den Erntegutbergungsvorsatz zugreifen kann. Vorteilhaft voranlasst die Auswerte- und Steuereinheit in einem derartigen Fall definierte Steuerbefehle. Im einfachsten Fall umfassen die Steuerbefehle eine akustische und/oder optische Warnung an den Bediener der selbstfahrenden Erntemaschine. Um Fehlbedienungen seitens des Bedieners zu vermeiden, umfassen die Steuerbefehle bei einer vorteilhaften Weiterbildung der Erfindung ein selbsttätiges Abschalten und/oder ein selbsttätiges Beeinflussen der Betriebsparameter des Erntegutbergungsvorsatzes und/oder einzelner Funktionselemente des Erntegutbergungsvorsatzes.

Um auch bei sehr großen Erntegutbergungsvorsatzabmessungen den Erntegutfluss innerhalb des Erntegutbergungsvorsatzes sicher überwachen zu können, umfasst die Sensoreinheit bei einer vorteilhaften Weiterbildung der Erfindung eine Mehrzahl an Kameras und/oder zumindest eine bewegliche Kamera und/oder zumindest eine Kamera mit einem Fischaugenobjektiv und/oder zumindest eine Kamera mit einem Weitwinkelobjektiv.

Eine vorteilhafte Weiterbildung der Erfindung ist insbesondere derart ausgebildet, dass die Auswerte- und Steuereinheit ein Bildauswerteverfahren umfasst, welches die Bilder des Erntegutflusses innerhalb des Erntegutbergungsvorsatzes nach Unregelmäßigkeiten wie beispielsweise Erntegutflussproblemen und/oder Fremdkörpern innerhalb des Erntegutes untersucht, so dass der Fahrer der selbstfahrenden Erntemaschine von der Aufgabe der Überwachung des Erntegutflusses entlastet ist.

Vorteilhaft ist das Bildauswerteverfahren als Bewegungsunschärfeverfahren ausgebildet, bei dem die Belichtungszeit der einzelnen Bilder derart einstellbar ist, dass vom bewegten Erntegutfluss eine Bewegungsunschärfe erfasst wird und die Unregelmäßigkeiten im Erntegutfluss als scharfe Bilder dargestellt werden. Somit erfasst die Auswerte- und Steuereinheit direkt anhand eines scharf dargestellten Bildes eine Unregelmäßigkeit innerhalb des Erntegutflusses.

Bei einer alternativen vorteilhaften Ausführungsform der Erfindung ist das Bildauswerteverfahren als Bildvergleichsverfahren ausgebildet bei dem die Belichtungszeit der einzelnen Bilder derart einstellbar ist, dass eine Verschiebung von Erntegutmerkmalen von Bild zu Bild erfassbar ist. Somit ist aufgrund von unveränderten Erntegutmerkmalen zwischen zwei oder einer Mehrzahl von Bildern ein Erntegutflussproblem seitens der Auswerte- und Steuereinheit einfach erfassbar. Eventuelle Fremdkörper innerhalb des Erntegutflusses fassen sich beispielsweise durch einen Vergleich der aufgenommenen Bilder mit Referenzbildern ermitteln, wobei die Referenzbilder entweder selber Fremdkörper zeigen oder einen Erntegutfluss ohne Fremdkörper zeigen und das Bildauswerteverfahren unmittelbar einen Unterschied zwischen dem aufgenommenen Bild und dem Referenzbild erfasst und als Unregelmäßigkeit definiert.

Um den Erntegutfluss innerhalb des Erntegutbergungsvorsatzes ständig optimal überwachen zu können, ist die Sensoreinheit bei einer vorteilhaften Weiterbildung der Erfindung oberhalb des Erntegutbergungsvorsatzes an einem unteren oder einem oberen Bereich der Fahrerkabine der selbstfahrenden Erntemaschine und/oder oberhalb der Funktionselemente des Erntegutbergungsvorsatzes an einem seitlichen Bereich des Erntegutbergungsvorsatzes angeordnet.

Vorteilhaft entspricht der Überwachungsbereich der Sensoreinheit dem Arbeitsbereich des Erntegutbergungsvorsatzes, so dass der gesamte Erntegutfluss innerhalb des Erntegutbergungsvorsatzes überprüfbar ist.

Bei einer vorteilhaften Ausführungsform der Erfindung ist die selbstfahrende Erntemaschine als Mähdrescher und der Erntegutbergungsvorsatz als Schneidwerk ausgebildet.

Anhand der beigefügten Zeichnung wird die Erfindung nachfolgend näher erläutert. Es zeigt:

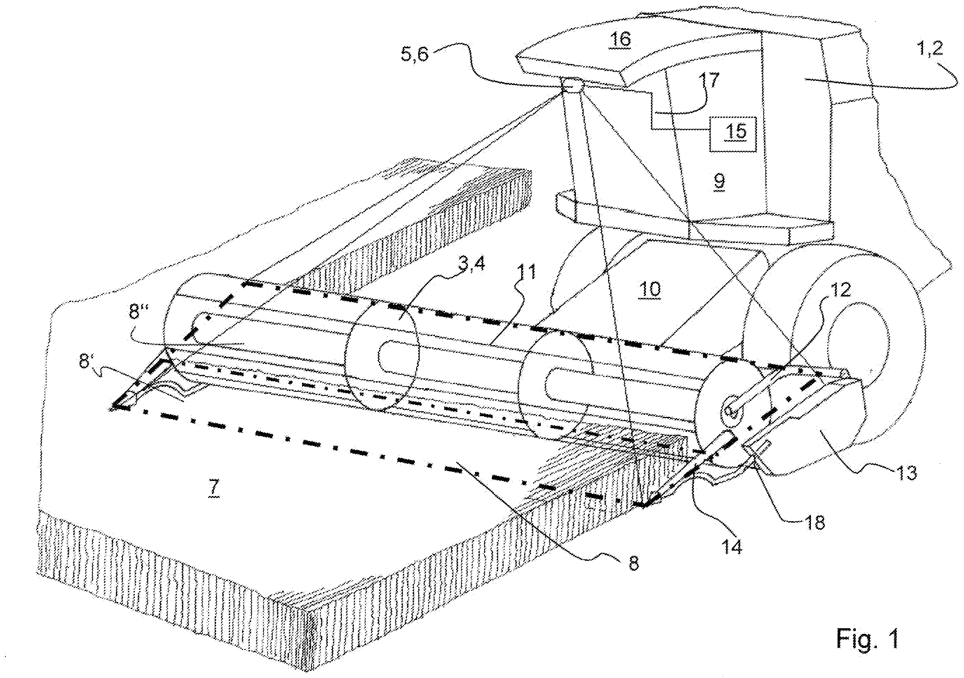

Fig. 1: eine schematische perspektivische Ansichte einer selbstfahrenden Erntemaschine,

Figur 1 zeigt in einer schematischen perspektivischen Ansicht den vorderen Bereich einer als Mähdrescher 2 ausgebildeten selbstfahrenden Erntemaschine 1 mit einem als Schneidwerk 4 für Getreide ausgebildeten Erntegutbergungsvorsatz 3. Das Schneidwerk 4 ist in einem vorderen Bereich des Mähdreschers 2 angeordnet und mit einem Schrägförderer 10 verbunden. Das Schneidwerk 4 besteht im Wesentlichen aus einem Schneidwerksgehäuse 13, einer an Tragarmen 12 verstellbar gelagerten drehbaren Haspel 11, welche die Zufuhr des Erntegutes 7 in das Schneidwerk 4 unterstützt, jeweils einem an den äußeren vorderen Kanten des Schneidwerks 4 angeordneten Halmteiler 14, der innerhalb des Erntegutes 7 die einzelnen Halme voneinander trennt, so dass eine saubere Erntegasse für das Schneidwerk 4 entsteht, einem mit oszillierenden Messerklingen ausgebildeten Messerbalken 18, dem Messerbalken 18 vorgelagerten, hier nicht dargestellten Ährenhebern und einer dem Messerbalken 18 nachgeordneten, innerhalb des Schneidwerksgehäuses 13 angeordneten und in der Figur ebenfalls nicht dargestellten Querförderschnecke, die das geerntete Erntegut zur Mitte des Schneidwerks 4 hin zusammenführt und dann an eine innerhalb des Schrägförderers 10 befindliche Erntegutfördereinrichtung übergibt. Oberhalb der Kabine 9 des Mähdreschers 2 ist am vorderen Ende des Daches 16 der Kabine 9 eine als Kamera 6 ausgebildete Sensoreinheit 5 angeordnet Die Kamera 6 ist derart ausgebildet und ausgerichtet, dass sie den Erntegutfluss innerhalb des Schneidwerks 4 vollständig überwachen kann, so dass ihr Überwachungsbereich 8 dem Bereich entspricht, in welchem das Erntegut 7 mit Funktionselementen des Schneidwerks 4 in Kontakt steht. Die Kamera 6 ist über eine Signalleitung 17 mit einer Auswerte- und Steuereinheit 15 verbunden, welche ein Bildauswerteverfahren enthält. Werden nun mittels des Bildauswerteverfahrens Unregelmäßigkeiten innerhalb des Erntegutflusses ermittelt, so erzeugt die Auswerte- und Steuereinheit 15 entsprechende Steuerbefehle um einzelne oder eine Mehrzahl an Funktionselementen des Schneidwerks derart zu beeinflussen, dass die Unregelmäßigkeiten im Erntegutfluss behoben werden.

Beispielhaft wird im Folgenden auf mögliche Ausgestaltungen der Bitderfassung, der Bildauswertung und der Steuerung der Funktionselemente des Schneidwerks 4 eingegangen, wobei die genannten Beispiele nicht als einschränkend für die ertindungsgemäße Überwachungseinrichtung des Erntegutflusses innerhalb eines Erntegutbergungsvorsatzes 3 einer selbstfahrenden Erntemaschine 1 anzusehen sind, sondern lediglich mögliche vorteilhafte Ausführungen zeigen.

Unter optimalen Erntebedingungen sind die Fahrgeschwindigkeit des Mähdreschers 2, die Schneidwerkshöhe über dem Boden, die Haspelhöhe, die Haspelposition im Bezug auf den Messerbalken 18, die Haspeldrehzahl, die Position der Schneidwerksmulde und die Drehzahl der Querförderschnecke derart aufeinander abgestimmt, dass die Gutgeschwindigkeit des Erntegutflusses annähernd konstant ist, da von der Querförderschnecke genauso viel erntegut an die Fördereinrichtung des Schrägförderers 10 übergeben wird, wie am Messerbalken neu abgeschnitten wird. Bedingt durch unterschiedlich stark ausgebildeten Erntegutbestand und/oder einer nur teilweisen Nutzung der Schneidwerksbreite und/oder aufgenommenen und/oder am Schneidwerk 3 abgebrochenen Fremdkörpern kann es jedoch dazu kommen, dass keine optimalen Erntebedingungen vorliegen und es zu Gutflussproblemen in dem Erntegutfluss innerhalb des Schneidwerkes 3 kommt. Diese Gutflussprobleme sollen erfindungsgemäß mittels der Kamera 6 sensiert werden,

Um die Gutgeschwindigkeit des Erntegutflusses innerhalb des Schneidwerks 4 mittels der Kamera 6 möglichst genau erfassen zu können, ist es vorteilhaft, die Bildaufnahme immer zu einer definierten Haspel- oder Querförderschneckenposition vorzunehmen. Hierzu ist an der Haspel 11 und/oder an der Querförderschnecke ein Positionssensor angeordnet, der beispielsweise bei jeder Umdrehung der Haspel 11 und/oder der Querförderschnecke ein entsprechendes Signal an die Kamera 6 sendet, welches die Aufnahme eines Bildes auslöst. Das erfasste Bild wird dann mittels der Signalleitung 17 an die Auswerte- und Steuereinheit 15 geleitet, welche ein entsprechendes Bildauswerteverfahren beinhaltet.

Das Erkennen von Gutflussproblemen mittels des Bildauswerteverfahrens kann auf unterschiedliche Weise vorgenommen werden.
Beispielsweise wird die Belichtungszeit der Kamera 6 derart gewählt, dass vom bewegten Erntegutfluss eine Bewegungsunschärfe erfasst wird, wobei Gutflussprobleme dann als scharfe Bilder erfasst und entsprechend ausgewertet werden. Alternativ ist es möglich, die Belichtungszeit der Kamera 6 derart zu wählen, dass eine Verschiebung von Erntegutmerkmalen von Bild zu Bild erfassbar ist. Somit kann dann durch direkten Bildvergleich überprüft werden, ob und wie weit sich charakteristische Erntegutmerkmale verschoben haben. Unregelmäßigkeiten sind so schnell und einfach erfassbar. Weiterhin ist es möglich, die aufgenommenen Bilder der Kamera 6 innerhalb der Auswerte- und Steuereinrichtung 15 mit hinterlegten Referenzbildern zu vergleichen und bei festgestellten Gemeinsamkeiten mit den Referenzbildern entsprechende Schlüsse zu ziehen. Dies kann derart erfolgen, dass die Referenzbilder Erntegutflussprobleme und/oder Fremdkörper innerhalb des Erntegutflusses zeigen und das Bildauswerteverfahren erfasst, wenn ähnliche Aufnahmen aktuell von der Kamera 6 gemacht werden. Alternativ ist es möglich, dass die Referenzbilder einen normalen Erntegutfluss zeigen und das Bildauswerteverfahren jedwede Abweichung von diesen Referenzbildern erkennt.
Alternativ oder zusätzlich ist es möglich, dass das Bildauswerteverfahren derart ausgebildet ist, dass es die mittels der Kamera 6 erfassten Bilder des Überwachungsbereichs 8 in unterschiedliche Zonen 8',8" aufteilt und den Erntegutfluss innerhalb der einzelnen Zonen 8',8" miteinander vergleicht, So ist es beispielsweise möglich, dass eine erste Zone 8' als der Bereich zwischen den Spitzen der Halmteiler 14 bis zu den Ährenhebern festgelegt wird und eine zweite Zone 8" als der Bereich hinter dem Messerbalken 18 festgelegt wird. Wird nun in der ersten Zone 8' ein gewisser Erntegutbestand erkannt und in der zweiten Zone 8" keine dem Bestand entsprechende Erntegutmenge festgestellt, so folgert die Auswerte- und Steuereinheit 15 daraus, dass das Erntegut 7 nicht genügend gut aufgenommen wird und veranlasst entsprechende Gegenmaßnahmen.
Alternativ oder zusätzlich ist es möglich, dass die Kamera 6 und/oder das Bildauswerteverfahren derart ausgebildet ist, dass bei erfasster Teilbreitennutzung des Schneidwerks 4, beispielsweise bei ungleichförmigen Feldabmessungen, die Überwachung des Erntegutflusses nur auf den Teil des Schneidwerkes 4 angewandt wird, der mit Erntegut 7 beaufschlagt wird.
Alternativ oder zusätzlich ist es möglich, dass die Kamera 6 und/oder das Bildauswerteverfahren derart ausgebildet ist, dass bei erfassten Erntegutflussproblemen und/oder Fremdkörpern der Bereich, in dem die Erntegutflussprobleme und/oder Fremdkörper sensiert wurden, mittels einer Zoom-Funktion genauer überwacht werden, um seitens der Auswerte- und Steuereinheit 15 eine genauere Aussage treffen zu können, wodurch die Erntegutflussprobleme bedingt sind und/oder welcher Art der Fremdkörper ist.
Das in die Auswerte- und Steuereinheit 15 implementierte Bildauswerteverfahren kann in Abhängigkeit von sensierten Erntegutflussproblemen innerhalb des Schneidwerks 4 unterschiedliche Maßnahmen veranlassen,
Beispielhaft ist es möglich, dass der Fahrer des Mähdreschers 2 eine optische und/oder akustische Warnmeldung erhält, sobald das Bildauswerteverfahren ein Erntegutflussproblem sensiert.
Alternativ oder zusätzlich ist es möglich, dass die Auswerte- und Steuereinheit 15 im Falle einer erfassten geringen Erntegutgeschwindigkeit oder einem Erntegutstau im Schneidwerksbereich unmittelbar vor der Querförderschnecke selbsttätig die Einstellung der Haspel 11 verändert. Beispielsweise kann die Haspelhöhe reduziert und/oder die Haspelposition mittels des Tragarms 12 verschoben werden, bis die Auswerte- und Steuereinheit 15 mittels der Kamera 6 sensiert, dass die Erntegutgeschwindigkeit wieder ausreichend ist.
Alternativ oder zusätzlich ist es möglich, dass die Auswerte- und Steuereinheit 15 im Falle eines erfassten Fremdkörpers innerhalb des Erntegutflusses einen Schnellstopp des Schneidwerks 4 und/oder des Mähdreschers 2 veranlasst, so dass der Fremdkörper keine Schäden an den Funktionselementen des Schneidwerks 4 und/oder des Mähdreschers 2 verursachen kann. Alternativ oder zusätzlich ist es denkbar, dass die Auswerte- und Steuereinheit 15 in einem solchen Fall selbsttätig veranlasst, dass das Schneidwerk 4 mittels des Schrägförderers 10 angehoben wird. Alternativ oder zusätzlich ist es möglich, dass die Auswerte- und Steuereinheit 15 im Falle einer erfassten schlechten Erntegutaufnahme die Haspelposition und/oder die Haspelhöhe derart anpasst, dass die Haspel 11 das Erntegut 7 anhebt, so dass der Messerbalken 18 das Erntegut 7 schneiden und es innerhalb des Schneidwerks 4 weitertransportiert werden kann. Alternativ oder zusätzlich kann die Höhe des Schneidwerks 4 über dem Boden derart abgesenkt werden, dass die Ährenheber das Erntegut 7 besser anheben können, so dass der Messerbalken 18 das Erntegut 7 schneiden und es innerhalb des Schneidwerks 4 weitertransportiert werden kann. Eine derartige Anordnung des Schneidwerks 4 und/oder der Haspel 11 birgt jedoch die Gefahr, dass sich der Verschleiß der Bauteile erhöht und/oder dass eine höhere Anzahl an Steinen oder anderen Fremdkörpern in das Schneidwerk 4 gelangen. Daher überprüft die Auswerte- und Steuereinheit 15 fortlaufend, ab wann die Haspelposition und/oder die Schneidwerkshöhe wieder in einen unkritischen Bereich versteift werden kann, Sobald anhand der Bilder feststellbar ist, dass die Haspel 11 zu tief in das Erntegut 7 eintaucht, schließt die Auswerte- und Steuereinheit 15 daraus, dass die Haspelposition und/oder die Schneidwerkshöhe wieder in einen unkritischen Bereich verstellt werden können.
Alternativ oder zusätzlich ist es möglich, dass die Auswerte- und Steuereinheit 15 im Falle eines erfassten Förderns von Erntegut 7 mittels der Haspel 11 vor das Schneidwerk 4 oder eines erfassten Wickelns von Erntegut 7 um die Haspel 11 selbsttätig veranlasst, dass die Haspel 11 mittels der Tragarme 12 angehoben und/oder auf den Tragarmen 12 verschoben wird.
Alternativ oder zusätzlich ist es möglich, dass die Auswerte- und Steuereinheit 15 im Falle von erfassten abgeschnittenen Ähren vor dem Schneidwerk 4 selbsttätig veranlasst, dass die Haspel 11 mittels der Tragarme 12 abgesenkt und/oder auf den Tragarmen 12 verschoben wird.
Alternativ oder zusätzlich ist es möglich, dass die Auswerte- und Steuereinheit 15 im Falle von erfassten Spritzkörnern innerhalb des Kamerabildes selbsttätig veranlasst, dass die Haspel auf den Tragarmen 12 verschoben wird und/oder dass die Haspeldrehzahl angepasst wird.
Alternativ oder zusätzlich ist es möglich, dass die Auswerte- und Steuereinheit 15 im Falle von erfassten ausgefallenen Körner im Schneidwerk 4, was insbesondere bei sehr reifen Erntegutarten und Erschütterungen durch die Haspel 11 erfolgen kann, selbsttätig veranlasst, dass die Schneidwerksmulde weiter nach vorne verstellt wird.

Alternativ oder zusätzlich ist es möglich, dass die Kamera 6 auch im Nichterntebetrieb des Schneidwerks 4, beispielsweise im Vorgewende, das Schneidwerk 4 überwacht und die Auswerte- und Steuereinheit 15 die erfassten Bilder dann auf abgebrochene Messerklingen, Einzugsfinger und/oder Ährenheber und/oder auf Ablagerungen an den Funktionselementen des Schneidwerks 4 hin auswertet. In einem derartigen Falle erfolgt dann beispielsweise ein optischer und/oder akustischer Hinweis an den Fahrer des Mähdreschers 2, dass er Gegenmaßnahmen einleiten sollte. Alternativ oder zusätzlich kann die Auswerte- und Steuereinheit 15 selbsttätig Gegenmaßnahmen veranlassen.
Um eine möglichst große Flexibilität der Sensoreinheit 5 zu ermöglichen, ist die Kamera und/oder das Bildauswerteverfahren innerhalb der Auswerte- und Steuereinheit 15 auf unterschiedliche Erntegutbergungsvorsätze 3 und unterschiedliche Erntegutbergungsvorsatzabmessungen anpassbar.

### Bezugszeichenliste:

- 1: Selbstfahrende Erntemaschine
- 2: Mähdrescher
- 3: Erntegutbergungsvorsatz
- 4: Schneidwerk
- 5: Sensoreinheit
- 6: Kamera
- 7: Erntegut
- 8: Überwachungsbereich
- 8': erste Zone
- 8": zweite Zone
- 9: Kabine
- 10: Schrägförderer
- 11: Haspel
- 12: Tragarm
- 13: Schneidwerksgehäuse
- 14: Halmteiler
- 15: Auswerte- und Steuereinheit
- 16: Dach
- 17: Signalleitung
- 18: Messerbalken

## Patentansprüche

1. Selbstfahrende Erntemaschine (1) mit einem Erntegutbergungsvorsatz (3), welcher zumindest eine Erntegutschneideinrichtung oder eine Erntegutaufnahmeeinrichtung und zumindest eine Erntegutfördereinrichtung aufweist, wobei der selbstfahrenden Erntemaschine (1) und/oder dem Erntegutbergungsvorsatz (3) zumindest eine Sensoreinheit (5) zugeordnet ist, wobei die Sensoreinheit (5) zumindest eine Kamera (6) umfasst, welche den Erntegutfluss innerhalb des Erntegutbergungsvorsatzes (3) überwacht,
**dadurch gekennzeichnet,**
**dass** die Kamera (6) derart ausgebildet ist, dass bei erfasster Teilbreitennutzung des Erntegutbergungsvorsatzes (3) die Überwachung des Erntegutflusses nur auf den Teil des Erntegutbergungsvorsatzes (3) angewandt wird, der mit Erntegut (7) beaufschlagt wird.

2. Selbstfahrende Erntemaschine (1) nach Anspruch 1 **dadurch gekennzeichnet, dass** die Sensoreinheit (5) mit einer Auswerte- und Steuereinheit (15) verbunden ist, welche den Betrieb und/oder einzelne Funktionen des Erntegutbergungsvorsatzes (3) steuert.

3. Selbstfahrende Erntemaschine (1) nach Anspruch 2, **dadurch gekennzeichnet, dass** die Auswerte- und Steuereinheit (15) im Falle von mittels der Sensoreinheit (5) sensierten Erntegutflussproblemen und/oder Fremdkörpern innerhalb des Erntegutes (7) definierte Steuerbefehle veranlasst.

4. Selbstfahrende Erntemaschine (1) nach Anspruch 3, **dadurch gekennzeichnet, dass** die Steuerbefehle eine akustische und/oder optische Warnung an den Bediener der selbstfahrenden Erntemaschine (1) umfassen.

5. Selbstfahrende Erntemaschine (1) nach einem der Ansprüche 3 bis 4, **dadurch gekennzeichnet, dass** die Steuerbefehle ein selbsttätiges Abschalten und/oder ein selbsttätiges Beeinflussen der Betriebsparameter des Erntegutbergungsvorsatzes (3) und/oder einzelner Funktionselemente des Erntegutbergungsvorsatzes (3) umfassen.

6. Selbstfahrende Erntemaschine (1) nach einem der Ansprüche 1 bis 5, **dadurch gekennzeichnet, dass** die Sensoreinheit (5) eine Mehrzahl an Kameras (6) und/oder zumindest eine bewegliche Kamera (6) und/oder zumindest eine Kamera (6) mit einem Fischaugenobjektiv und/oder zumindest eine Kamera (6) mit einem Weitwinkelobjektiv umfasst.

7. Selbstfahrende Erntemaschine (1) nach einem der Ansprüche 2 und 6, **dadurch gekennzeichnet, dass** die Auswerte- und Steuereinheit (15) ein Bildauswerteverfahren umfasst, welches die Bilder des Erntegutflusses innerhalb des Erntegutbergungsvorsatzes (3) nach Unregelmäßigkeiten wie beispielsweise Erntegutflussproblemen und/oder Fremdkörpern innerhalb des Erntegutes (7) untersucht.

8. Selbstfahrende Erntemaschine (1) nach Anspruch 7, **dadurch gekennzeichnet, dass** das Bildauswerteverfahren als Bewegungsunschärfeverfahren ausgebildet ist, bei dem die Belichtungszeit der einzelnen Bilder derart einstellbar ist, dass vom bewegten Erntegutfluss eine Bewegungsunschärfe erfasst wird und die Unregelmäßigkeiten im Erntegutfluss als scharfe Bilder dargestellt werden.

9. Selbstfahrende Erntemaschine (1) nach Anspruch 7, **dadurch gekennzeichnet, dass** das Bildauswerteverfahren als Bildvergleichsverfahren ausgebildet ist, bei dem die Belichtungszeit der einzelnen Bilder derart einstellbar ist, dass eine Verschiebung von Erntegutmerkmalen von Bild zu Bild erfassbar ist.

10. Selbstfahrende Erntemaschine (1) nach einem der vorstehenden Ansprüche, **dadurch gekennzeichnet, dass** die Sensoreinheit (5) oberhalb des Erntegutbergungsvorsatzes (3) an einem unteren oder einem oberen Bereich einer Fahrerkabine (9) der selbstfahrenden Erntemaschine (1) und/oder dass die Sensoreinheit (5) oberhalb der Funktionselemente des Erntegutbergungsvorsatzes (3) an einem seitlichen Bereich des Erntegutbergungsvorsatzes (3) angeordnet ist.

11. Selbstfahrende Erntemaschine (1) nach einem der vorstehenden Ansprüche, **dadurch gekennzeichnet, dass** der Überwachungsbereich (8) der Sensoreinheit (5) dem Arbeitsbereich des Erntegutbergungsvorsatzes (3) entspricht.

12. Selbstfahrende Erntemaschine (1) nach einem der vorstehenden Ansprüche, **dadurch gekennzeichnet, dass** die selbstfahrende Erntemaschine (1) als Mähdrescher (2) und der Erntegutbergungsvorsatz (3) als Schneidwerk (4) ausgebildet ist.

## Claims

1. A self-propelled harvester (1) comprising a crop material recovery front attachment (3) which has at least one crop material cutting device or a crop material pick up device and at least one crop material conveyor device, wherein at least one sensor unit (5) is associated with the self-propelled harvester (1) and/or the crop material recovery attachment (3), wherein the sensor unit (5) includes at least one camera (6) which monitors the flow of crop material within the crop material recovery attachment (3),
**characterised in that**
the camera (6) is so designed that when partial width utilisation of the crop material recovery attachment (3) is detected monitoring of the flow of crop material is applied only to the part of the crop material recovery attachment (3) which is acted upon with crop material (7).

2. A self-propelled harvester (1) according to claim 1 **characterised in that** the sensor unit (5) is connected to an evaluation and control unit (15) which controls operation and/or individual functions of the crop material recovery attachment (3).

3. A self-propelled harvester (1) according to claim 2 **characterised in that** the evaluation and control unit (15) implements defined control commands in the case of crop material flow problems and/or foreign bodies within the crop material (7), that are sensed by means of the sensor unit (5).

4. A self-propelled harvester (1) according to claim 3 **characterised in that** the control commands include an acoustic and/or optical warning to the operator of the self-propelled harvester (1).

5. A self-propelled harvester (1) according to one of claims 3 and 4 **characterised in that** the control commands include automatic shut-down and/or automatic influencing of the operating parameters of the crop material recovery attachment (3) and/or individual functional elements of the crop material recovery attachment (3).

6. A self-propelled harvester (1) according to one of claims 1 to 5 **characterised in that** the sensor unit (5) includes a plurality of cameras (6) and/or at least one movable camera (6) and/or at least one camera (6) having a fisheye lens and/or at least one camera (6) having a wide-angle lens.

7. A self-propelled harvester (1) according to one of claims 2 and 6 **characterised in that** the evaluation and control unit (15) includes an image evaluation process which examines the images of the flow of crop material within the crop material attachment (3) for irregularities like for example crop material flow problems and/or foreign bodies within the crop material (7).

8. A self-propelled harvester (1) according to claim 7 **characterised in that** the image evaluation process is in the form of a motion blur process in which the exposure time of the individual images is adjustable in such a way that a motion blur of the moved flow of crop material is detected and the irregularities in the flow of crop material are represented as sharp images.

9. A self-propelled harvester (1) according to claim 7 **characterised in that** the image evaluation process is in the form of an image comparison process in which the exposure time of the individual images is adjustable in such a way that a shift of crop material features from one image to another can be detected.

10. A self-propelled harvester (1) according to one of the preceding claims **characterised in that** the sensor unit (5) is arranged above the crop material recovery attachment (3) at a lower or an upper region of a driving cab (9) of the self-propelled harvester (1) and/or that the sensor unit (5) is arranged above the functional elements of the crop material recovery attachment (3) at a lateral region of the crop material recovery attachment (3).

11. A self-propelled harvester (1) according to one of the preceding claims **characterised in that** the monitoring region (8) of the sensor unit (5) corresponds to the working region of the crop material recovery attachment (3).

12. A self-propelled harvester (1) according to one of the preceding claims **characterised in that** the self-propelled harvester (1) is in the form of a combine harvester (2) and the crop material recovery attachment (3) is in the form of a cutting header (4).

## Revendications

1. Machine de récolte automotrice (1) comprenant un équipement frontal de collecte de produit récolté (3), lequel comprend au moins un équipement de coupe de produit récolté ou un équipement de ramassage de produit récolté, à la machine de récolte automotrice (1) et/ou à l'équipement frontal de collecte de produit récolté (3) étant associée au moins une unité de capteur (5), l'unité de capteur (5) comprenant au moins une caméra (6) qui surveille le flux de produit récolté à l'intérieur de l'équipement frontal de collecte de produit récolté (3),
**caractérisée en ce que** la caméra (6) est conçue de façon que, lorsqu'une utilisation de largeur partielle de l'équipement frontal de collecte de produit récolté (3) a été détectée, la surveillance du flux de produit récolté n'est exercée que sur la partie de l'équipement frontal de collecte de produit récolté (3) qui est sollicitée par du produit récolté (7).

2. Machine de récolte automotrice (1) selon la revendication 1, **caractérisée en ce que** l'unité de capteur (5) est reliée à une unité d'analyse et de commande (15) qui commande le fonctionnement et/ou des fonctions individuelles de l'équipement frontal de collecte de produit récolté (3).

3. Machine de récolte automotrice (1) selon la revendication 2, **caractérisée en ce qu'**en présence de problèmes de flux de produit récolté et/ou de corps étrangers détectés au moyen de l'unité de capteur (5) à l'intérieur du produit récolté (7), l'unité d'analyse et de commande (15) délivre des instructions de commande définies.

4. Machine de récolte automotrice (1) selon la revendication 3, **caractérisée en ce que** les instructions de commande comprennent un avertissement acoustique et/ou optique adressé à l'utilisateur de la machine de récolte automotrice (1).

5. Machine de récolte automotrice (1) selon une des revendications 3 à 4, **caractérisée en ce que** les instructions de commande comprennent une mise hors service automatique et/ou une action automatique sur les paramètres d'exploitation de l'équipement frontal de collecte de produit récolté (3) et/ou d'éléments fonctionnels individuels de l'équipement frontal de collecte de produit récolté (3).

6. Machine de récolte automotrice (1) selon une des revendications 1 à 5, **caractérisée en ce que** l'unité de capteur (5) comprend une pluralité de caméras (6) et/ou au moins une caméra mobile (6) et/ou au moins une caméra (6) avec un objectif ultra grand-angulaire et/ou au moins une caméra avec un objectif grand-angulaire.

7. Machine de récolte automotrice (1) selon une des revendications 2 et 6, **caractérisée en ce que** l'unité d'analyse et de commande (15) comprend un processus d'analyse d'images qui recherche, dans les images du flux de produit récolté à l'intérieur de l'équipement frontal de collecte de produit récolté (3), des irrégularités comme par exemple des problèmes de flux de produit récolté et/ou des corps étrangers à l'intérieur du produit récolté (7).

8. Machine de récolte automotrice (1) selon la revendication 7, **caractérisée en ce que** le processus d'analyse d'images est conformé en processus de flou cinétique avec lequel le temps de pose des différentes images est réglable de façon à enregistrer un flou cinétique à partir du flux de produit récolté en mouvement et à représenter les irrégularités dans le flux de produit récolté sous la forme d'images nettes.

9. Machine de récolte automotrice (1) selon la revendication 7, **caractérisée en ce que** le processus d'analyse d'images est conformé en processus de comparaison d'images avec lequel le temps de pose des différentes images est réglable de façon à enregistrer un déplacement de caractéristiques de produit récolté d'une image à l'autre.

10. Machine de récolte automotrice (1) selon une des revendications précédentes, **caractérisée en ce que** l'unité de capteur (5) est disposée au-dessus de l'équipement frontal de collecte de produit récolté (3) dans une zone inférieure ou une zone supérieure d'une cabine de conduite (9) de la machine de récolte automotrice (1) et/ou **en ce que** l'unité de capteur (5) est disposée au-dessus des éléments fonctionnels de l'équipement frontal de collecte de produit récolté (3) dans une zone latérale de l'équipement frontal de collecte de produit récolté (3).

11. Machine de récolte automotrice (1) selon une des revendications précédentes, **caractérisée en ce que** la zone de surveillance (8) de l'unité de capteur (5) correspond à la zone de travail de l'équipement frontal de collecte de produit récolté (3).

12. Machine de récolte automotrice (1) selon une des revendications précédentes, **caractérisée en ce que** la machine de récolte automotrice (1) est conformée en moissonneuse-batteuse (2), et l'équipement frontal de collecte de produit récolté (3) en tablier de coupe (4) .
